Europäisches Patentamt

European Patent Office

Office européen des brevets

(19)

(11) Publication number: **0 124 188**
**B1**

# (12) EUROPEAN PATENT SPECIFICATION

(45) Date of publication of patent specification: **19.11.87**

(21) Application number: **84300097.7**

(22) Date of filing: **06.01.84**

(51) Int. Cl.⁴: **B 05 D 1/26,** B 05 C 5/02, B 05 C 11/10

(54) **Controlling an adhesive laying machine.**

(30) Priority: **13.04.83 GB 8309944**

(43) Date of publication of application:
**07.11.84 Bulletin 84/45**

(45) Publication of the grant of the patent:
**19.11.87 Bulletin 87/47**

(84) Designated Contracting States:
**BE DE FR GB IT NL SE**

(56) References cited: .
EP-A-0 011 355
FR-A-2 304 952
FR-A-2 475 941
GB-A-1 591 534
GB-A-2 054 197
US-A-4 084 539

(73) Proprietor: **FORD MOTOR COMPANY LIMITED
Eagle Way
Brentwood Essex CM13 3BW (GB)**
(84) **BE GB IT NL SE**

(73) Proprietor: **FORD-WERKE
AKTIENGESELLSCHAFT
Ottoplatz 2 Postfach 21 03 69
D-5000 Köln 21 (DE)**
(84) **DE**

(73) Proprietor: **FORD FRANCE SOCIETE ANONYME
344 Avenue Napoléon Bonaparte B.P. 307
F-92506 Rueil Malmaison Cedex (FR)**
(84) **FR**

(72) Inventor: **Massie, Stephen Payl
3, Kingsway
South Woodham Ferrers Essex (GB)**
Inventor: **Nelson, John Christopher
22 Viking Road
Maldon Essex (GB)**

(74) Representative: **Messulam, Alec Moses et al
A. Messulam & Co. 24 Broadway
Leigh on Sea Essex SS9 1BN (GB)**

Courier Press, Leamington Spa, England.

EP 0 124 188 B1

## Description

This invention relates to a method of controlling an adhesive laying machine, and to an adhesive laying machine itself.

It is known from US—A—4 084 539 to control an adhesive laying machine so that the appropriate amount of adhesive is applied, taking into account the speed of the machine and/or of the surface to which the adhesive is applied. In this specification, which discloses a method and an adhesive laying machine of the type indicated in the pre-characterising part of independent claims 1 and 2, the feed pressure applied to the adhesive is monitored and kept constant.

The window and windshield glass of motor vehicles is frequently bonded into place using an adhesive. In another known method a thick bead of a highly viscous adhesive is used, and to achieve a good result it is necessary to ensure that the adhesive bed which is laid is of uniform dimensions.

Polyurethane adhesives, which are much used for this application, tend to increase in viscosity if left to stand for any length of time. When the adhesive is laid by machine, a constant viscosity is required, so this characteristic means that the machine has to be purged frequently which is both time-consuming and wasteful. Control of the pressure applied to such adhesives is not sufficient to ensure that a uniform bead is laid.

According to the present invention, there is provided a method of controlling the operation of an adhesive laying machine, which includes the steps of extruding adhesive through a nozzle of the machine and against a surface, continuously sensing the value of a parameter and controlling the machine in accordance with the sensed value so that a bead of uniform dimensions is laid, characterised in that the parameter which is sensed depends upon the viscosity of the adhesive and is a dimension of the extruded bead.

Further according to the invention, there is provided an adhesive laying machine having a nozzle through which the adhesive is extruded, during use, onto a surface, means for sensing the value of a parameter and means for controlling the operation of the machine in accordance with the sensed value so that a bead of uniform dimensions is laid, characterised in that the sensing means comprises sensors adapted to sense a parameter which depends upon the viscosity of adhesive extruded through the nozzle and which is a dimension of a bead being laid by the machine.

The parameter sensed can be the height or length of the bead ahead of the nozzle. Control can be exercised by altering the pumping pressure pumping the adhesive through the nozzle, or by altering the speed of movement of the nozzle.

The invention will now be further described, by way of example, with reference to the accompanying drawings, in which:

Figure 1 is a perspective view of the nozzle of an adhesive laying machine; and

Figure 2 and 3 are views of the nozzle of Figure 1 viewed in the direction of the arrow I and illustrating alternative embodiments of the invention.

The adhesive bead can be laid either on the frame to which the glass is to be secured, or on the glass itself. Only the second of these alternatives is shown in the drawings, but it will be understood that the features shown can be applied to both alternatives.

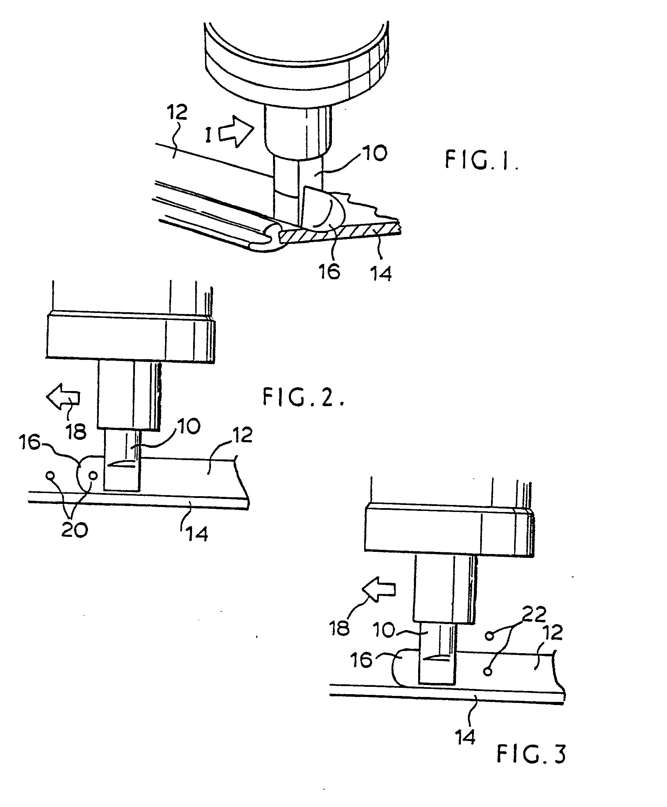

Figure 1 shows a nozzle 10 laying a bead 12 of polyurethane adhesive around the edge of a pane of glass 14. The path of movement of the nozzle around the edge of the glass can be computer numerically controlled. As can be seen in the Figure, the nozzle leaves a bead 12 behind it as it moves, but also pushes a short bead 16 in front of it.

In Figures 2 and 3, the direction of movement of the nozzle 10 is to the left, as shown by the arrows 18.

Figure 2 shows two optical sensors 20 which are positioned so as to sense the position of the front end, and therefore the length of the short bead 16. Only two sensors are shown, but in practice there will be a larger number to increase the accuracy of the value sensed. The position of the right hand sensor is shown in the drawings, but in fact it will be obscured by the bead 16. The length of this bead 16 depends on the viscosity of the adhesive and will be longer when the viscosity is low and shorter when the viscosity is high. The machine will be controlled, as will be desscribed later, so as to keep this length at a constant, predetermined value.

Figure 3 shows two optical sensors 22 which are positioned so as to sense the position of the top edge, and therefore the height of the bead 12 which may be of the order of 10 mm. Again there will in practice be more than the two sensors shown. The height of this bead will be greater when the viscosity is low and less when the viscosity is high.

The sensors 20 or 22 provide a negative feedback to the machine, and the machine operation is controlled in a direction indicated by whether the sensed value exceeds or lies below the predetermined value for that particular parameter. The feedback is continuous, so that the machine operation can be controlled such that a bead of uniform, desired dimensions is continuously laid.

The machine operation is controlled either by varying the speed with which it moves in the direction of the arrow 18 or by varying the pressure used to pump the adhesive through the nozzle. When one of these factors is varied, the other is kept constant. When the viscosity is high, either the nozzle will be slowed down or the pumping pressure will be increased, and when the viscosity is low, either the nozzle will be speeded up or the pumping pressure will be decreased.

The arrangement described is suitable for use with an adhesive which cures with atmospheric moisture, such as a polyurethane adhesive.

## Claims

1. A method of controlling the operation of an adhesive laying machine, which includes the steps of extruding adhesive through a nozzle (10) of the machine and against a surface (14), continuously sensing the value of a parameter and controlling the machine in accordance with the sensed value so that a bead (12) of uniform dimensions is laid, characterised in that the parameter which is sensed depends upon the viscosity of the adhesive and is a dimension of the extruded bead (12, 16).

2. An adhesive laying machine having a nozzle through which the adhesive is extruded, during use, onto a surface, means (20, 22, 24) for sensing the value of a parameter and means for controlling the operation of the machine in accordance with the sensed value so that a bead (12) of uniform dimensions is laid, characterised in that the sensing means comprises sensors adapted to sense a parameter which depends upon the viscosity of adhesive extruded through the nozzle (10) and which is a dimension of a bead (12, 16) being laid by the machine.

3. A machine as claimed in Claim 2, characterised in that the sensors (22) are arranged to sense the height of the bead (12).

4. A machine as claimed in Claim 2, characterised in that the sensors (20) are arranged to sense the length of the bead (12) ahead of the nozzle (10).

## Patentansprüche

1. Methode zum Steuern des Betriebs einer Klebstoffauftragsmaschine, bei dem Klebstoff durch eine Düse (10) der Maschine gegen eine Fläche (14) ausgepresst, der Wert einer Grösse kontinuierlich abgetastet und die Maschine gemäss dem abgetasteten Wert gesteuert wird, so dass sich ein Streifen (12) mit einheitlichen Abmessungen ablegt, dadurch gekennzeichnet, dass die abgetastete Grösse von der Viskosität des Klebstoffs abhängt und eine Abmessung des ausgepressten Streifens (12, 16) darstellt.

2. Klebstoffauftragsmaschine mit einer Düse, durch die im Gebrauch Klebstoff auf eine Fläche ausgepresst wird, Mitteln (20, 22, 24) zum Abtasten des Wertes einer Grösse und Mitteln zum Steuern des Maschinenbetriebs gamäss dem abgetasteten Wert, so dass sich ein Streifen (12) mit einheitlichen Abmessungen ablegt, dadurch gekennzeichnet, dass die Abtastmittel aus Fühlern bestehen, die zum Abtasten einer Grösse geeignet sind, die von der Viskosität des durch die Düse (10) ausgepressten Klebstoffs abhängt und eine Abmessung des von der Maschine abgelegten Streifens (12, 16) darstellt.

3. Maschine nach Anspruch 2, dadurch gekennzeichnet, dass sie Fühler (22) zum Abtasten der Höhe des Streifens (12) angeordnet sind.

4. Maschine nach Anspruch 2, dadurch gekennzeichnet, dass die Fühler (20) zum Abtasten der Länge des Streifens (12) vor der Düse (10) angeordnet sind.

## Revendications

1. Procédé pour commander le fonctionnement d'une machine de dépôt d'adhésif, consistant à: extruder un adhésif à travers une buse (10) de la machine et contre une surface (14), à détecter en continu la valeur d'un paramètre et à commander la machine d'après la valeur détectée, de façon que soit déposé un boudin (12) de dimensions uniformes, caractérisé en ce que le paramètre qui est détecté dépend de la viscosité de l'adhésif et est une dimension du boudin extrudé (12, 16).

2. Machine de dépôt d'un adhésif comportant une buse à travers laquelle l'adhésif est extrudé, en fonctionnement, sur une surface, des moyens (20, 22, 24) pour détecter la valeur d'un paramètre et des moyens pour commander le fonctionnement de la machine d'après la valeur détectée de manière à déposer un boudin (12) de dimensions uniformes, caractérisée en ce que les moyens de détection sont constitués par des capteurs adaptés pour détecter un paramètre qui dépend de la viscosité d'un adhésif extrudé à travers la buse (10) et qui est une dimension d'un boudin (12, 16) déposé par la machine.

3. Machine suivant la revendication 2, caractérisée en ce que les capteurs (22) sont agencés pour capter la hauteur du boudin (12).

4. Machine suivant la revendication 2, caractérisée en ce que les capteurs (20) sont agencés pour capter la longueur du boudin (12) en avant de la buse (10).

FIG.1.

FIG.2.

FIG.3